(19) Europäisches Patentamt / European Patent Office / Office européen des brevets

(11) **EP 4 637 010 A1**

(12) **EUROPEAN PATENT APPLICATION**

(43) Date of publication:
22.10.2025 Bulletin 2025/43

(21) Application number: 24382417.4

(22) Date of filing: 18.04.2024

(51) International Patent Classification (IPC):
$H02M\ 1/32^{(2007.01)}$ $H02M\ 7/5395^{(2006.01)}$

(52) Cooperative Patent Classification (CPC):
H02M 1/325; H02M 7/5395

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Gamesa Electric, S.A. Unipersonal
48170 Zamudio (ES)

(72) Inventor: **The designation of the inventor has not yet been filed**

(74) Representative: **SGRE-Association
Siemens Energy Global GmbH & Co. KG
SE I IM P Intellectual Property
Siemenspromenade 9
91058 Erlangen (DE)**

(54) **HIGH VOLTAGE RIDE THROUGH FOR A POWER CONVERTER**

(57)    A method of controlling a power converter during an overvoltage event is provided. The power converter (100) is arranged to convert electrical power received from a power source (150) into AC electrical power that is fed into a power grid (200). The power converter (100) comprises plural semiconductor switches that are operated using a pulse width modulation, PWM, technique. A parameter $(M, v_a, v_g)$ indicative of a voltage on a grid side of the power converter (100) is monitored. The power converter (100) is operated in a first operating mode (31) in which the power converter feeds electrical power into the power grid (200). Upon detecting an overvoltage condition based on the monitored parameter, the power converter (100) is operated in a second operating mode (32) different from the first operating mode (31), wherein the second operating mode (32) is a ride through mode in which the power converter (100) remains connected to the power grid (200).

FIG 3

**Description**

FIELD OF THE INVENTION

The present invention relates to a method of controlling a power converter during an overvoltage event. It further relates to a respective control system and computer program.

BACKGROUND

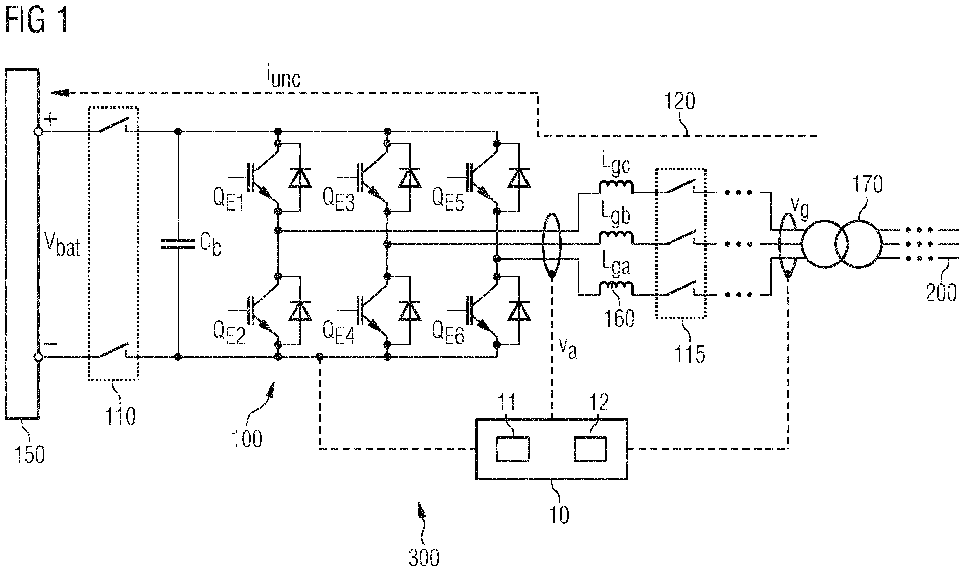

Several applications, in particular in connection with renewable energy sources, employ an energy storage system that feeds electrical power into an AC grid. A battery may for example be coupled to the DC link of a power converter, which may be connected to a collector grid, for example in parallel with one or more wind turbines or with one or more solar power sources. A power conversion system (PCS) is generally provided between a respective DC power source and an AC grid, such as an inverter comprising semiconductor switches and operating using a PWM (pulse width modulation) technique. When connecting the power source via such power converter to the AC grid for supplying power into the power grid, e.g. by closing respective DC and AC contactors, the AC voltage provided at the output of the power converter should generally be higher than the AC voltage of the AC grid, so that power flow occurs towards the grid. While the DC voltage is higher than the rectified AC, power flow occurs in a controlled way. If not, un-desirable and uncontrolled high currents may flow from the grid to the power source (power flow may certainly occur from the grid to the power source in a controlled manner for charging the power source, e.g. a battery). If the voltage on the grid rises, e.g. due to an overvoltage event, the rectified grid voltage may be higher than the DC voltage of the power source (e.g. battery voltage). Uncontrolled currents may thus occur which may flow from the grid to the power source, for example through the diodes of the semiconductor switches. Such uncontrolled current $i_{unc}$ is schematically illustrated in Fig. 1 by an arrow 120. Such uncontrolled current may damage the power source (e.g. a battery) and the diodes of the semiconductor switches, and may cause a fuse to open. It is however desirable that power systems stay connected to the grid also during the occurrence of such high voltage events on the grid. Grid operators and in particular grid codes may require a respective high voltage ride through (HVRT) capability of connected power systems.

To prevent damage to the power converter, the power converter may be tripped and disconnected from the AC grid (e.g., by opening respective circuit breakers). However, such disconnection may not be allowed by most grid codes and may result in a reduced stability of the grid. As an alternative solution, it is known to overrate the power converter. In other words, the nominal voltage on the AC side may be low enough compared to the voltage on the DC side so that for most overvoltage events on the grid, uncontrolled rectification is prevented. This may however result in a lowering of the rated power of the power converter. Using a low AC voltage in comparison with a high DC voltage on the DC link may further lead to an increased current ripple through the system, which may result in higher loses and reduced efficiency. Such solution may therefore result in increased costs and reduced power output.

SUMMARY

Accordingly, there is a need to mitigate at least some of the drawbacks mentioned above and to provide an improved way of handling overvoltage events on the power grid by a power converter.

This need is met by the features of the independent claims. The dependent claims describe examples of the invention.

According to an aspect of the invention, a method of controlling a power converter during an overvoltage event is provided. The power converter is arranged to convert electrical power received from a power source into AC electrical power that is fed into a power grid. The power converter comprises plural semiconductor switches that are operated using a pulse width modulation (PWM) technique. The method comprises monitoring a parameter indicative of a voltage on a grid side of the power converter and operating the power converter in a first operating mode in which the power converter feeds electrical power into the power grid. Upon detecting an overvoltage condition based on the monitored parameter, the power converter is operated in a second operating mode different from the first operating mode, wherein the second operating mode is a ride through mode in which the power converter remains connected to the power grid and continues to feed electrical power into the power grid. Operating in the second operating mode comprises operating the power converter in an overmodulation mode of the PWM technique and increasing the reactive power consumption of the power converter.

By such method, the power converter may be allowed to ride through overvoltage events on the power grid, wherein the overvoltage may be higher and/or may last longer while the power converter remains connected to the power grid. Furthermore, by such operation, the occurrence of uncontrolled currents flowing into the power converter and being rectified by the power converter, which may damage the power converter elements of the power converter and/or the power source coupled to the power converter, may be prevented. The HVRT capability of the power converter may thereby be extended significantly, so that the power converter can be kept connected to the power grid during most overvoltage events. By employing the overmodulation mode, the AC voltage at the output of the power converter may effectively be increased, whereas the increased reactive power consumption may reduce the AC voltage increase at the output of the power converter due to the overvoltage event on the grid. The overmodulation mode may generate a rather instantaneous increase of the AC output voltage of the power converter while the reactive power consumption may be increased over a prolonged period of time, so that by their combined effects, a rising voltage on the power grid can be handled and may be ridden through by the power converter. Overmodulation and increased reactive power consumption may thus interact synergistically to allow a significant extension of the HVRT capability of the power converter.

By the overmodulation mode, the power converter may be allowed to provide a higher output AC voltage than the voltage provided by the power source (e.g. on a DC side of the power converter) may conventionally allow. It may accordingly increase an AC overvoltage range in which the currents may be kept under control by the power converter. The voltage may be extended within a certain margin, as explained further below. The consumption of reactive power by the power converter may mean that the power converter outputs inductive reactive power (which is generally designated as reactive power consumption). Consuming reactive power may thus also be considered providing a power output with a lagging power factor. Such reactive power consumption may have an effect of lowering the AC voltage seen by the power converter. The reactive power consumption may in particular partially compensate the AC voltage increase due to the overvoltage event on the grid. Operating the power converter in an operating mode that lowers the AC voltage increase at the power output while at the same time increasing the generated AC voltage at the converter output may thus provide the power converter with a significantly improved HVRT capability.

The monitored parameter may be indicative of a relation between the voltage on the grid side of the power converter (e.g. AC voltage) and a voltage on a power source side of the power converter (e.g. a DC voltage on a DC input of the power converter, e.g. a battery voltage). For example, a modulation index may be monitored and/or the grid side voltage and the power side voltage may be monitored.

An overvoltage condition may for example be detected if the monitored parameter exceeds a threshold. For example, the voltage on a power source side ($v_{bat}$) of the power converter may be monitored and the voltage on the grid side ($v_g$) may be monitored, and the overvoltage condition may be detected if they fulfill a predefined relationship, for example the relationship $v_{bat} > \sqrt{2}\, v_g + m$, wherein m represents a predetermined safety margin (e.g. between 1 and 50 V, e.g. 10 V). Other possibilities exist, as explained below.

In an example, operating in the second operating mode may comprise simultaneously operating the power converter in the overmodulation mode and increasing the reactive power consumption during at least some period of time of operation in the second operating mode. Preferably, both are operated simultaneously during the entire period of time of operation in the second operating mode. Effective HVRT may thus be achieved by the power converter.

It should be noted that the overmodulation may already start prior to entering the second operating mode in which both, overmodulation and increased reactive power consumption are performed.

In other examples, operating in the second operating mode may comprise first operating the power converter in the overmodulation mode and later increasing the reactive power consumption (in addition to operating in the overmodulation mode). In another example, operating in the second operating mode may comprise first increasing the reactive power consumption and later operating the power converter in the overmodulation mode (in addition to increasing reactive power consumption). Accordingly, different orders of these measures may be employed, depending on the configuration of the power converter and the desired reaction to a grid overvoltage event.

In some examples, different thresholds may be used for starting the operation in the overmodulation mode and the increasing of the reactive power consumption in the second operating mode. For example, starting the overmodulation may occur automatically by the converter control, as soon as the reference signal for PWM starts to increase in amplitude beyond a carrier signal amplitude. A threshold for the monitored parameter, e.g. for modulation index or for grid voltage, may be employed for starting the increased reactive power consumption and thus for starting operation in the second operating mode. In other examples, both may be started at the same time (upon reaching or exceeding the threshold) or within a short period of time.

In an example, operating the power converter in the overmodulation mode may comprise operating the power converter with a modulation index larger than 1.154, e.g. above 1.16. It should be clear that during operation in the second operating mode, the modulation index may dynamically change in accordance with the dynamically changing grid voltage. In general, the output voltage of the power converter may be controlled such that uncontrolled current flow into the power converter is prevented.

The modulation index may be an amplitude modulation index. The modulation index may depend on or be proportional to a ratio of the grid voltage amplitude ($\sqrt{2} * v_g$) and half of the DC voltage provided by the power source to a DC input of the power converter ($v_{bat}/2$; this may indicate the maximum AC amplitude achievable at the power converter output). The modulation index may for example be $M = 2 * \sqrt{2} * v_g / (\sqrt{3} * v_{bat})$ for a three phase system (the factor $\sqrt{3}$ results from the need to provide a three phase AC voltage from the DC link voltage; it may be set differently for different phase systems).

Operating the power converter in the overmodulation mode may comprise controlling the power converter with a reference waveform of the PWM technique that has a larger amplitude than an amplitude of a carrier waveform of the PWM technique. Although the AC output of the power converter may become distorted when increasing the amplitude of the reference waveform beyond that of the carrier waveform, which may for example cause clipping and a stopping of switching for plural switching cycles, a higher AC output voltage may be achieved. A maximum AC output voltage achievable by the power converter may for example correspond to a square wave at the grid frequency.

According to an example, increasing the reactive power consumption of the power converter may comprise lowering an AC voltage on a grid side of the power converter. The increase of the reactive power consumption may in particular be performed so as to achieve such reduction compared to the AC voltage on the power converter grid side without the reactive power consumption. Besides the grid voltage and the impedance of, e.g., an inductance coupled between the AC output of the power converter and the power grid, an impedance of the grid, an impedance of a transformer (if provided), and the like, the AC voltage at the output of the power converter may be determined by the active and reactive power output of the power converter. By consuming more reactive power (e.g. by generating negative reactive power), the AC voltage at the power output may be lowered.

The reactive power consumption of the power converter may for example be increased by changing a set point of a control of the power converter that controls the reactive power output of the power converter to cause the power converter to generate AC electrical power with a lagging power factor at its AC power output. For example, if the overvoltage event is detected, the respective set point may be adjusted accordingly. As an example, a reactive power set point (Q*) and/or a current set point which controls the reactive power output may be adjusted to increase reactive power consumption. An efficient way of modifying the reactive power output of the power converter may thus be provided and HVRT may be facilitated.

Increasing the reactive power consumption of the power converter may comprise controlling the power converter to consume the maximum amount of reactive power possible under current operating conditions of the power converter. The increase to the maximum amount may occur directly when starting to increase the reactive power consumption, or may occur gradually during operation in the second operating mode. This may for example depend on the type and/or magnitude of the overvoltage event. The maximum amount of reactive power that the power converter is capable of providing may for example be determined by an actual active power output of the power converter and a maximum current rating and/or voltage rating of the power converter, and/or a reactive power flow in the opposite direction. The maximum amount of inductive reactive power possible for the nominal or rated operating parameters of the power converter may thus be provided.

The monitored parameter may be at least one of a voltage on the grid side, a voltage on a power source side, and a modulation index of the PWM technique.

When operating in the second operating mode, an active power output of the power converter may be reduced and/or stopped to increase a reactive power consumption capability of the power converter. This may for example occur upon the monitored parameter reaching or exceeding a respective curtailing threshold, which may be a curtailing voltage threshold if voltage is monitored and/or a curtailing modulation index threshold if a modulation index of the PWM technique is monitored. By such method, current capacity of the power converter may be made available for reactive power consumption, which may allow a further lowering of the AC voltage on the AC side of the power converter (e.g. a decreasing of the AC voltage rise due to the overvoltage event). The power converter may thus stay connected to the power grid even if the voltage increase in the AC power output due to overmodulation reaches its limits. For example, the curtailing modulation index threshold may be at or above 1.14, 1.16, or 1.18; it may for example be at or above 1.2. In an exemplary implementation, the active power output of the power converter may be stopped at a modulation index threshold of 1.2. It should be clear that several respective curtailing thresholds may be employed, for example a first respective threshold for reducing the active power output and a second threshold for stopping the active power output. Also, it is conceivable to gradually reduce the active power output upon a gradual increase of the modulating index after the modulation index has passed a respective first threshold.

The overvoltage condition for entering the second operating mode may for example be detected by detecting that the monitored parameter reaches of exceeds a respective threshold, e.g. by detecting that a monitored voltage on a grid side ($v_a$, $v_g$) of the power converter reaches or exceeds a voltage threshold, by detecting that the monitored power source side voltage ($v_{bat}$) reaches or exceeds a voltage threshold, by detecting that the monitored power source side voltage ($v_{bat}$) and the monitored grid side voltage ($v_a$, $v_g$) fulfill a predefined relationship and/or by detecting that a monitored modulation index (M) reaches or exceeds a modulation index threshold. The modulation index, which may be an amplitude modulation index, generally depends on the AC voltage at the output of the power converter and thus on the AC voltage of the power grid. The modulation index may rise if the grid voltage rises so that an overvoltage event may be detected by using the modulation index. Upon reaching or exceeding the modulation index threshold, the increase in reactive power consumption may in particular be started. Overmodulation may already occur prior to reaching/exceeding such modulation index threshold, or may also be started with reaching/exceeding the modulation index threshold.

In some examples, the method may further comprise opening the circuit breaker and/or contactor to decouple the power converter from the power grid and/or the power source upon the monitored parameter reaching or exceeding a second threshold, e.g. a second voltage threshold (if voltage is monitored) or a second power source side voltage threshold (if power source side voltage is monitored), and/or a second modulation index threshold (if modulation index is monitored) and/or by detecting that the monitored power source side voltage and the monitored grid side voltage fulfill a predefined relationship. It may be preferred to open the power grid (AC) side first. The respective second threshold may be higher than the aforementioned threshold for, e.g., the grid voltage or the modulation index. An AC breaker may for example be provided between an inductance coupled to an AC output of the power converter and a transformer that provides the power output by the power converter to a power grid. The second threshold for the modulation index may for example be at or above 1.22, 1.23, 1.24, or 1.25. The maximum value of the modulation index for overmodulation may be about 1.27 (which may correspond to the above-mentioned square wave). The second modulation index threshold may however be set lower so that during a rising grid voltage, a safety margin may be provided to prevent uncontrolled currents, and the circuit breaker may be provided with sufficient time for opening. The circuit breaker may in particular be a grid circuit breaker.

An inductance may be coupled between the power converter and the power grid. It may in particular be connected in series between the power converter and the power grid. Further, a transformer may be coupled between the power converter and the power grid. The inductance is preferably coupled or connected between the power converter and the transformer. The inductance may for example provide an output filter for the power converter. Such transformer may transform the electrical power to be fed into the power grid. The output of the power converter may for example be within a low voltage range (e.g. up to 1.000V AC), and the transformer may feed the output electrical power into a medium voltage power grid (MV voltage; e.g. above 1.000V). Electrical power output by the power converter may in particular pass through the inductance. The AC voltage level at the power output of the power converter may thus be affected by the impedance of the inductance. The inductance may be provided by a respective inductor, such as a coil, a choke, a reactor, or the like. It may further be affected by the impedance a transformer series inductance and the grid reactance, which may further contribute to a lowering of the AC voltage on the power converter Ac side.

The semiconductor switches of the power converter may comprise a body diode. For example, they may be IGBTs (insulated gate bipolar transistors).

The power source may be a DC power source. For example, the power source may be an energy storage device, such as a battery. In other examples, the power source may be an AC power source.

Monitoring of the parameter may occur by receiving respective monitoring data, e.g. for the grid voltage and/or for the modulation index. In other examples, it may occur by calculating, measuring using a respective sensor, or the like. A converter controller may for example typically obtain voltage measurements on the grid side of the power converter, and may provide the respective information for the monitoring of the grid voltage for an overvoltage event. The grid voltage may be monitored before an inductance coupled to an AC output of the power converter (e.g. between the power converter and the inductance) or behind such inductance. As another example, if a modulation index of the PWM technique is monitored, the modulation index may be calculated based on monitored or measured voltage (e.g., DC link voltage and grid voltage), or the modulation index may be received from a converter controller that generates the reference signal for the PWM modulation.

The power grid may be a local grid, such as a local wind farm, solar plant, or other grid. In other examples, the power grid may be a utility grid, an island grid, or the like.

Operation in the second operating mode may be performed to provide a high voltage ride through capability for a grid overvoltage event of at least 120% of the nominal grid voltage, preferably at least 125% or 130% of the nominal grid voltage.

The power converter may further be operable or operated in a charging mode in which power received from the power grid is converted by the power converter and is provided to the power source to increase a level of stored energy of the power source (e.g., to charge a battery).

According to a further aspect of the invention, a control system configured to control a power converter during an overvoltage event is provided. The power converter is arranged to convert electrical power received from a power source into AC electrical power that is fed into a power grid. The power converter comprises plural semiconductor switches and is configured to operate the semiconductor switches using a pulse width modulation, PWM, technique. The control system is configured to perform any of the methods disclosed herein.

According to a further aspect of the invention, a converter system comprising a power converter configured to be coupled between an energy storage device and a power grid and a respective control system is provided. The control system is configured to control the power converter using any of the methods disclosed herein. The power converter may have any of the configuration described herein.

The power converter may be a DC/AC power converter configured to be coupled to a DC power source. The power converter may provide a three phase AC output. The converter system may further comprise the inductance.

According to a further aspect of the invention, an energy storage system comprising an energy storage device, such as a battery, and a respective converter system is provided. The power converter of the converter system is coupled or (directly) connected to the energy storage device. In some examples, a further power converter may for example be provided between the power source and the power converter.

According to a further aspect of the invention, a computer program for controlling a power converter during an overvoltage event is provided. The power converter is arranged to convert electrical power received from a power source into AC electrical power that is fed into a power grid, wherein the power converter comprises plural semiconductor switches and is configured to operate the semiconductor switches using a pulse width modulation (PWM) technique. The computer program comprises control instructions which, when executed by a processing unit of a control system that controls the operation of the power converter, cause the processing unit to perform any of the methods disclosed herein. Such computer program, in particular the respective control instructions, may be provided on a volatile or non-volatile storage medium or data carrier, and/or may be provided via a communication connection, such as a wired or wireless network connection.

By such control system, converter system, energy storage system, or computer program, advantages may be achieved that correspond to the advantages outlined further above with respect to the method.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

BRIEF DESCRIPTION OF THE DRAWINGS

The forgoing and other features and advantages of the invention will become further apparent from the following detailed description read in conjunction with the accompanying drawings. In the drawings, like reference numerals refer to like elements.

Fig. 1 is a schematic drawing showing a power converter controlled in accordance with an example of the invention.

Fig. 2 is a schematic diagram illustrating operation in an overmodulation mode according to an example of the invention.

Fig. 3 is a schematic drawing illustrating different operating ranges for the modulation index according to an example of the invention.

Fig. 4 is a flow diagram illustrating a method of controlling a power converter according to an example of the invention.

Fig. 5 is a schematic diagram illustrating a conventional operation of a power converter during an overvoltage event on the power grid.

Fig. 6 is a schematic diagram illustrating operation of a power converter using overmodulation during an overvoltage event.

Fig. 7 is a schematic diagram illustrating operation of a power converter using overmodulation and increased reactive power consumption during an overvoltage event according to an example of the invention.

DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

Fig. 1 schematically illustrates a power converter system 300 comprising the power converter 100 and the control system 10 according to an example of the invention. Converter system 300 further comprises an inductor 160 via which the AC output of the power converter 100 is coupled to the power grid 200. Inductance 160 may be provided as a separate device comprising one or more inductors, e.g. coils, reactors, or the like, which may for example provide output filtering for the power converter 100, or it may represent inductances of, e.g., connecting cables that couple the power converter 100 to power grid 200. Converter system 300 may further comprise an AC circuit breaker 115 and/or a DC circuit breaker 110.

Power converter 100 may be configured to provide DC-to-AC conversion for a power source 150 from which power is to be fed into power grid 200. The power source 150 may be provided in form of an energy storage device. The energy storage device may for example be a battery, but other types of energy storage devices may likewise be used. Also, in other implementations, the energy storage device may provide AC electrical power, such as from an electrical machine driven by a flywheel or the like, and the power converter may provide AC to AC conversion. It is however preferred that the power source side of the power converter is a DC side.

A transformer 170 may further be provided to transform the AC electrical power supplied at the output of power converter 100 to the AC voltage level required by power grid 200; it may for example perform a low voltage to medium voltage transformation. Transformer 170 may form part of the converter system 300, but is optional.

The converter system 300 and the energy storage device 150 may form an energy storage system according to an example of the invention. Energy storage device 150 may provide DC power that is converted by power converter 100.

Control system 10 may comprise a converter controller that controls the semiconductor switches $Q_{E1}$ to $Q_{E6}$ of the power converter 100. Converter system 10 may employ a respective pulse width modulation (PWM) technique and may provide corresponding PWM signals to the semiconductor switches. The semiconductor switches may for example be implemented by IGBTs or other suitable switches and may comprise a body diode or free-wheeling diode as shown in Fig. 1.

The control system 10 may comprise a processing unit 11 and a memory 12. Processing unit 11 may comprise any kind of processor, such as a microprocessor, an application-specific integrated circuit, a field-programmable gate array, a digital signal processor and the like. Memory 12 may comprise any kind of memory, such as RAM, ROM, EEPROM, Flash Memory, a hard-disk drive and the like. Control system 10 may comprise further components common to a computer system, such as respective input/output interfaces, a data communication bus for interconnecting the different components, and a user interface. Memory 12 may store control instructions to be executed by processing unit 11. Such control instructions may be configured to cause the control system 10 to perform any of the methods described herein.

The control system 10 may be implemented by one or more controllers. It may for example comprise a converter controller for controlling power converter 100 and a storage system controller for controlling the overall storage system. The control system 10 may be local to the power converter 100 or may be a distributed control system that may comprise local and remote control components.

The control system 10 may measure a voltage $v_a$ at an AC output of the power converter 100 and/or may measure a grid voltage $v_g$, e.g. at the converter side of the transformer 170 or directly on grid 200 (e.g. if no transformer is present). It may further measure a voltage $v_{bat}$ at the DC side of power converter 100, for example a battery voltage. Such DC link voltage may be used for conventional control of the power converter 100, using e.g. a vector control scheme or the like. Such conventional control schemes may be provided with a set point for active and reactive power output of the power converter 100. A respective control scheme may for example derive current set points $i^*_p$, $i^*_q$ in the dq frame (rotating synchronous with the grid frequency) and may derive therefrom a voltage reference signal for controlling the pulse width modulation of the semiconductor switches. The pulse train for such PWM technique may be derived conventionally by comparing such voltage reference signal to the carrier signal (e.g. using a comparator) which results in a train of width-modulated pulses.

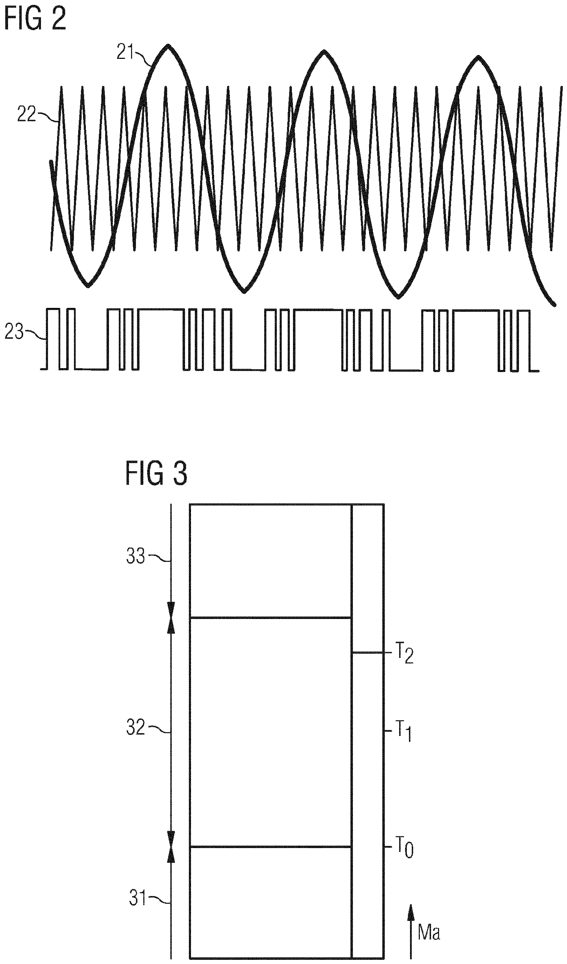

Fig. 2 shows a respective example of pulse width modulation. The reference signal 21 is compared to the carrier signal 22 to generate the pulse train 23. A respective pulse train is generated for each semiconductor switch, which is controlled in accordance therewith. Fig. 2 shows an example of an overmodulation mode in which the amplitude of the reference wave 21 exceeds the carrier signal 22. Accordingly, the pulse train 23 does not longer comprise a pulse for every switching cycle, but includes a period over several switching cycles during which the PWM signal is clamped to the high or low signal value. During such overmodulation, the waveform output by the power converter 100 may be slightly distorted; however, a higher effective AC output voltage may be achieved. During conventional PWM operation, the reference signal 21 stays within the limits of the carrier signal 22. For normal PWM operation, the power source voltage must satisfy the equation: $v_{bat} > \sqrt{2}\, v_g + m$, wherein m represents a margin required to ensure proper operation of the inverter when switching (e.g. about 10V). The modulation index may be defined as:

$$M = 2 * \sqrt{2} * v_g / (\sqrt{3} * v_{bat}) \qquad\qquad (1)$$

without consideration of the margin m. The factor $\sqrt{2}$ accounts for that the grid voltage is given as an RMS value, and the factor $\sqrt{3}$ accounts for that the DC power source needs to provide three AC phase voltages - the equation may however be adapted for other system configurations. For the normal operating range without overmodulation, the modulation index may be $M \leq 1.154$. The control system 10 may monitor the modulation index M, e.g. by calculating the modulation index for received monitoring data for voltages $v_g$ (or $v_a$) and $v_{bat}$, or by receiving monitoring data for M from, e.g., a converter controller that operates using the reference and carrier waveforms 21, 22 which are indicative of the modulation index.

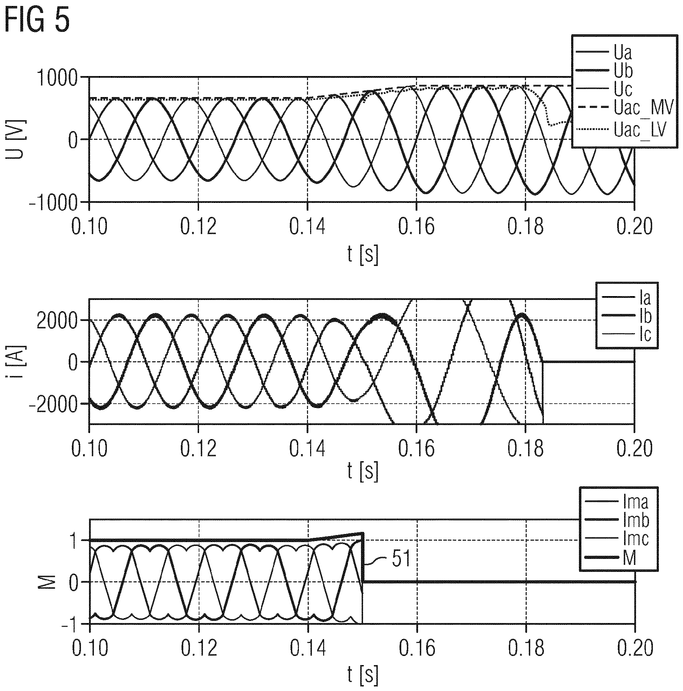

Operation using conventional PWM may be considered to constitute a first (normal) operating mode 31, which is illustrated in Fig. 3. Fig. 3 shows different operating modes for different modulation indexes M, which increases in vertical direction. The first operating mode 31 may occur up to a modulation index threshold $T_0$. During such normal operation, both, the DC contactor 110 and the AC circuit breaker 115 are closed. If a high voltage event now occurs on the power grid 200, the grid voltage will rise, and accordingly, the modulation index M will increase proportionally. In a conventional system, this may result in a development of the electrical operating parameters of the power converter as illustrated in Fig. 5.

The first subplot of Fig. 5 (counted from the top) shows the AC phase voltages Ua, Ub, Uc at the output of the power converter 100. A high voltage event which power converter 100 may need to ride through may for example raise the voltage in the grid to 130%. In the present example, a three-phase system with a rated AC voltage of 810V (RMS) and a DC voltage of 1.330V is assumed; it should however be clear that these are only exemplary values and that the disclosure is not limited to these. At t=0.1s, the overvoltage event starts to raise these voltages up to 130%. The subplot 1 further shows the peak voltages on both sides of the transformer Uac_MV (AC voltage in the medium voltage grid (scaled)) and Uac_LV (the AC voltage seen by the power converter 100). The second subplot shows the AC currents Ia, Ib, and Ic at the AC output of the power converter 100. The third subplot shows the modulating signals for the PWM modulation Ima, Imb, and Imc and the modulation index M, which is an amplitude modulation index.

As can be seen in the figure, at the point in time 51, the modulation index M reaches or exceeds the value of 1.154, so that the required AC voltage can no longer be generated at the output of the power converter 100. The converter loses control, and the large currents start to appear. Accordingly, the converter control causes the converter to trip, in particular stops switching of the semiconductor switches (the modulation signals go to zero). Finally, due to the large currents, the AC breaker 115 may open (e.g. automatically) and the currents are extinguished.

There is however a time delay between the triggering of the AC circuit breaker 115 and the actual interruption of the current flow (for example about 30 ms). As the AC voltage keeps rising, the AC voltage becomes higher on the output side of the power converter 100. The respective AC voltage may then be rectified by the diodes of the semiconductor switches and may result in a rectified voltage that is higher than the voltage provided by the DC power source. Accordingly, currents may flow from the grid via the converter into the power source, for example into the battery. As the AC voltage keeps rising, uncontrolled current flows $I_{unc}$ may thus occur, as illustrated by arrow 120 in Fig. 1. These uncontrolled currents can be seen in subplot 2 of Fig. 5.

In such conventional control, large uncontrolled currents may thus flow into the power source and may accordingly damage the power source and/or the semiconductor switches of the power converter, in particular their respective diodes. Also, the power converter may be disconnected from the power grid 200, and the currents may cause one or more fuses to open. Grid stability may thus suffer.

In an example of the invention, if an overvoltage event is present on the power grid, the modulation index may raise above the modulation index value of M=1.154. Overmodulation may thereby be started automatically or by enabling after a respective threshold is reached or passed. The overvoltage event, and/or a drop in DC voltage on the power source side, may in particular cause the modulation index to be raised above a threshold $T_0$. The threshold $T_0$ may be set to a value of $T_0$=1.154; however, other values may be selected. Upon the presence of such overvoltage event, the power converter 100 may be operated in a second operating mode 32 as illustrated in Fig. 3. In the second operating mode, the power converter 100 is allowed to over-modulate, i.e. may be allowed to operate in an overmodulation mode of the PWM technique employed by power converter 100. The power converter may further be controlled to increase a reactive power consumption, for example to increase the reactive power consumption to a value that is as high as possible for the given operating conditions and the power converter rating.

Depending on the value of the threshold $T_0$, overmodulation may already occur prior to operating in the second operating mode. The increase in reactive power consumption in the second operating mode 32 may be started shortly after the start of the overmodulation, e.g. after a certain amount of time, after the modulation index has reached a predefined threshold (e.g. $T_0$), and/or after a predefined condition has been met, such as a certain output state of the power converter. In other examples, the increase of reactive power consumption in the second operating mode 32 may be started simultaneously with the overmodulation (e.g. by setting $T_0$ to 1.154), or may be started prior to starting the overmodulation.

In normal operation, to avoid the uncontrolled current $i_{unc}$, the voltages on the grid side and power source side should meet the relationship $v_{bat} > \sqrt{2}\, v_g + m$. Voltage $v_a$ may be increased or reduced in a controlled way to regulate the reactive power. The phase of $v_a$ may be employed by the control system 10 of power converter 100 to regulate the active power.

By increasing reactive power consumption, the voltage drop across the inductance 160 (and further the grid and transformer series inductances) can be increased such that the voltage $v_a$ at the power converter output can be lowered compared to the grid voltage $v_g$. The voltage $v_a$ may be given by:

$$v_a = (X / v_g) * \text{sqrt}(P^2 + (Q + v_g^2/X)^2) \qquad (2)$$

8

wherein X is the impedance of the inductance 160 and of the grid and transformer series inductances, P the active power, and Q the reactive power given out by power converter 100. For a lagging power factor (reactive power consumption), values of Q are negative. Accordingly, by increasing the reactive power consumption, the voltage $v_a$ can be lowered for a given grid voltage.

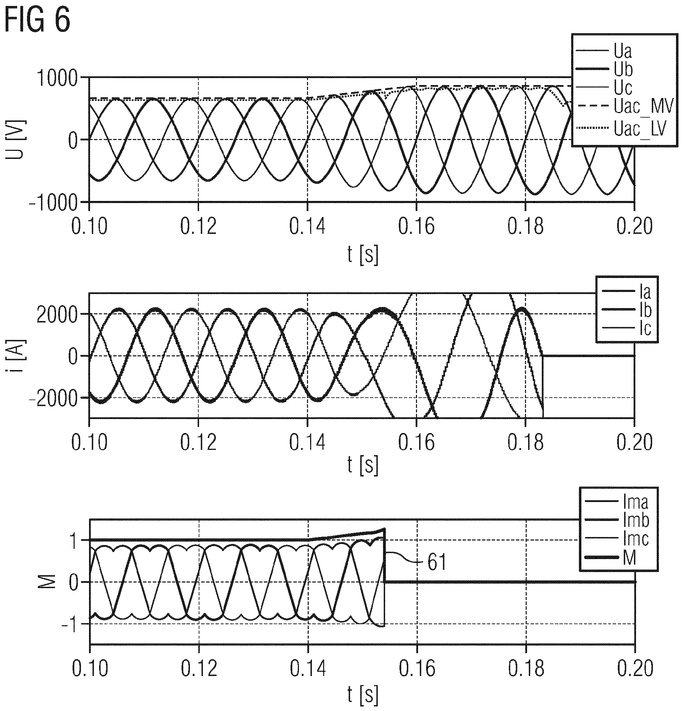

Fig. 6 shows diagrams corresponding to those of Fig. 5, wherein the power converter 100 is operated in the overmodulation mode upon reaching the modulation index M=1.154, e.g. after passing the threshold $T_0$. The overmodulation occurs up to a modulation index M of 1.24, which corresponds to the threshold $T_2$ in Fig. 3. The power converter is controlled to trip at or above the threshold $T_2$. As can be seen in Fig. 6, the power converter stays connected to the grid for a longer period of time and only trips at the point in time 61, which is later than 51 in Fig. 5. Again, after tripping, uncontrolled currents start to flow. Using this strategy (only employing overmodulation) may accordingly allow a ride through for less demanding overvoltage events on the power grid, but it is not enough to overcome the 130% overvoltage event illustrated in Figs. 5 and 6. Again, the uncontrolled currents only stop after the AC circuit breaker is triggered due to the high currents and interrupts the currents with a time delay of about 30 ms in the example of Fig. 6.

By additionally increasing the reactive power consumption of the power converter 100, the AC voltage seen by the power converter 100 at its AC output can be lowered. Accordingly, the power converter is enabled to generate an output voltage of the required magnitude even for higher overvoltages occurring on the power grid. Furthermore, the capability to consume reactive power may be increased by reducing the active power output of the power converter. For this purpose, a threshold $T_1$ may be provided, and upon the modulation index M reaching or exceeding the threshold $T_1$, the active power output of the power converter 100 may be controlled to be reduced or even to stop. The current capacity provided by the power converter 100 may then fully be used for reactive power consumption. The threshold $T_1$ may be termed a curtailing threshold, as the active power output of the power converter is curtailed in order to increase the reactive power output, i.e. increase the reactive power consumption.

The AC voltage seen at the output of the power converter 100 may thus be reduced, thereby increasing the ride through capability of power converter 100. Such threshold may for example be set to $T_1=1.2$, but other modulation index values may be employed for threshold $T_1$. Again, if the modulation index M continues to rise above the further threshold $T_2$, the control system 10 controls the power converter system to trip and in particular to stop switching and open the AC circuit breaker 115. The power source and the power converter may thereby be protected. The second threshold $T_2$ may for example be set to a value of M=1.24, which is below the maximum limit possible by overmodulation of M=1.27. By setting the threshold $T_2$ with a sufficient margin to the maximum limit, sufficient time may be available for the circuit breakers to open and a margin may be provided to prevent the occurrence of a current flow into the power source, i.e. of the uncontrolled currents 120. Upon the opening of the circuit breaker, the power converter 100 may thus be in a disconnected mode 33, wherein the overvoltage on the power grid is outside of the specification of the high voltage ride through capability of the power converter.

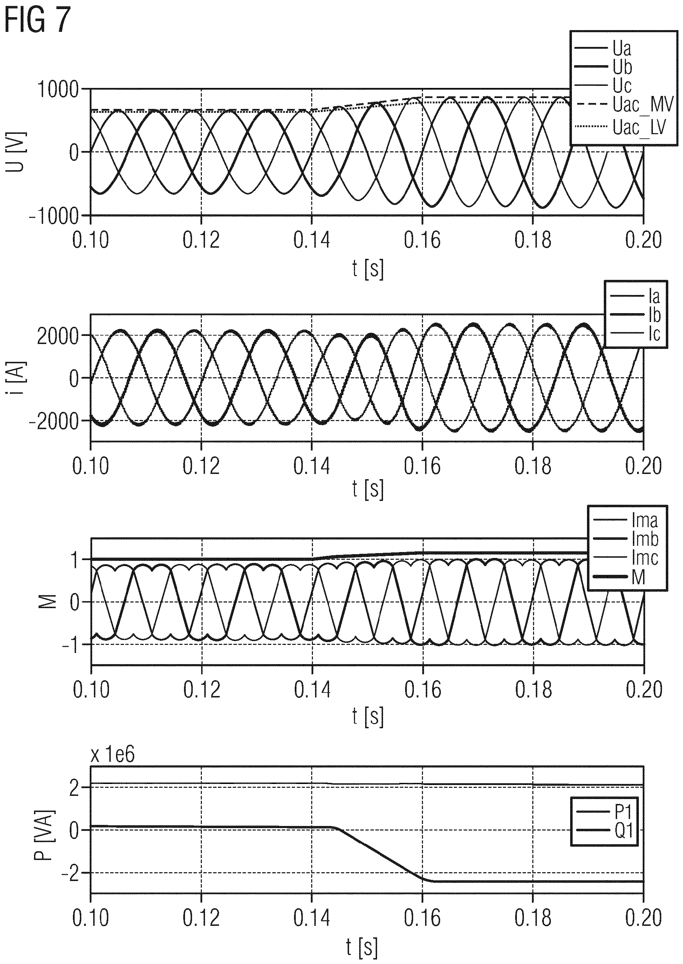

Fig. 7 shows diagrams corresponding to those of Fig. 5, wherein the power converter is operated in accordance with the operating modes explained with respect to Fig. 3, i.e. is operated in the second operating mode 32 that employs overmodulation and reactive power consumption upon exceeding of the threshold $T_0$. As can be seen in the fourth subplot of Fig. 7, the reactive power consumption of power converter 100 is started to increase (negative values of Q1) upon the modulation index reaching the threshold $T_0$ and the operation thus going into the second operating mode 32. The first subplot shows that the increase in reactive power consumption results in a decrease of voltage Uac_LV on the power converter side of the transformer compared to the voltage on the medium voltage side of the transformer Uac_MV. Reactive power consumption is increased up to the maximum value possible for the current operating conditions. The increase in reactive power consumption cannot occur instantaneously, but may take one or more cycles. As can be seen, the overmodulation synergistically interacts with the increase in reactive power consumption to allow the power converter to provide the required ride through capability. In particular, the second operating mode achieves that for an overvoltage event of 130%, the threshold T2 is not reached so that the power converter stays connected to the power grid and the operation of the power converter continues. Accordingly, the power converter is allowed to ride through the 130% overvoltage event. Further, as can be seen from the fourth subplot of Fig. 7, the active power output of the power converter remains constant during the overvoltage event. As mentioned above, it is also possible to decrease the active power output in order to increase the reactive power capability of the power converter, e.g. upon exceeding threshold $T_1$ as described above.

The solution is described above with respect to a three-phase power system; it should be clear that it may also be employed with a different number of phases. Further, the examples are given with respect to particular values of the voltages and with a particular size of the overvoltage event. However, it should be clear that the system may be configured in accordance with the respective application and may accordingly operate with different voltage values and may further be configured to ride through overvoltage events having a different magnitude. Also, the solution has been described above with respect to thresholds $T_0$-$T_2$ for the amplitude modulation index M. However, other parameters may be used in the control, such as the grid voltage $v_g$, the voltage $v_a$ at the power converter output, or the like. Corresponding thresholds $T_n$ may be set up for these parameters. However, use of the modulation index has the advantage that it considers the voltage level on the other side (e.g. the DC side) of the power converter 100, for example by considering the battery voltage level of the power source.

Also, another number of thresholds may be employed, e.g. only a single threshold, two thresholds, or more than three thresholds. For example, a further threshold may be employed at which the active power output is reduced by 50%, which may be lower than threshold $T_1$. Further additional thresholds may be used, in particular $T_n$ thresholds, n being one or more.

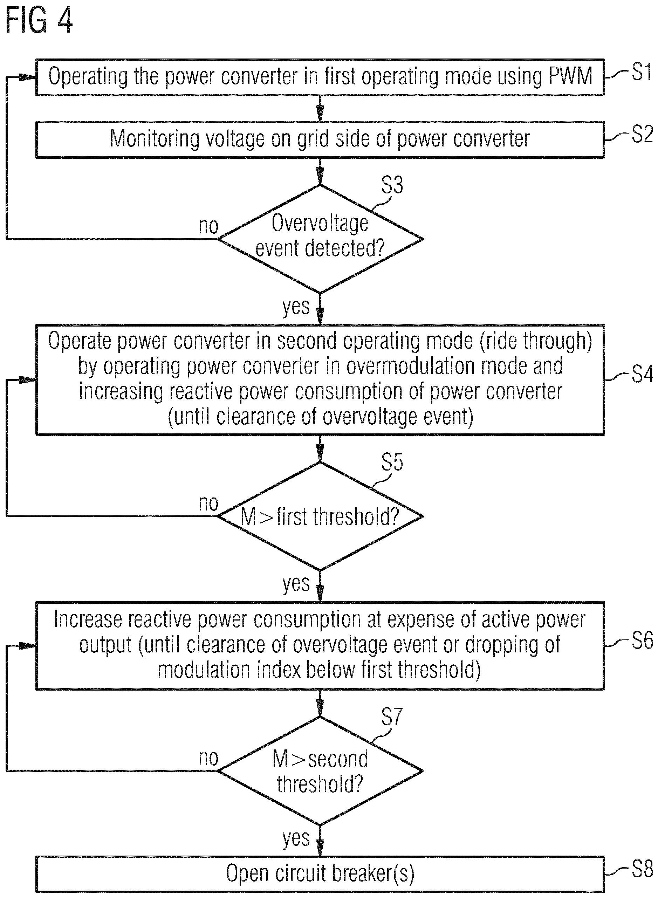

Fig. 4 is a flow diagram that illustrates an example of the methods described herein. In step S1, the power converter 100 is operated in the first operating mode 31 using PWM. It may thus operate within nominal operating parameters and without overmodulation. In step S2, the voltage on the grid side of the power converter may be monitored. For example, $v_a$ and/or $v_g$ may be monitored, and $v_{bat}$ may further be monitored. The monitoring may allow determining the modulation index M. Alternatively, the voltage on the power source side may be monitored, or the modulation index M may directly be monitored in step S2, e.g. from the PWM control. In step S3, the presence of an overvoltage event may be detected based on the monitored voltage (or alternatively based on monitored M). Such detection may occur by determining the amplitude modulation index based on the monitored voltages, and by comparing the amplitude modulation index to a threshold, e.g. $T_0$. If no overvoltage is detected, the method continues in step S1. If an overvoltage event is detected, the power converter is operated in the second operating mode 32, which is a ride through operating mode, in step S4. In the second operating mode, the power converter 100 is operated in the overmodulation mode and the reactive power consumption is increased. Depending on the setting of T0, overmodulation may already occur in the first operating mode. It is also possible to use separate thresholds for enabling overmodulation and for starting the increase of reactive power consumption.

In step S5, it is checked if the modulation index reaches or exceeds a first threshold, e.g. $T_1$. If this is not the case, the operation may continue in the second operating mode. This may for example occur until the overvoltage event is cleared, upon which operation may return to the first operating mode 31 (not shown in Fig. 4). If the threshold $T_1$ is exceeded in step S5, the reactive power consumption of the power converter 100 is increased in step S6 at the expense of active power output. As mentioned, this may occur by gradually reducing the active power output and/or stopping the active power output completely. In step S7, it is checked if the modulation index exceeds a second threshold, for example $T_2$. If this is not the case, operation may continue in the second operating mode with the reduced active power output (step S6). The operation may continue until the clearance of the overvoltage event, upon which operation may again continue in step S1, or until the modulation index drops below the first threshold $T_1$, upon which the active power output may be increased again. These steps are not illustrated in Fig. 3.

If in step S7, it is detected that the modulation index exceeds the second threshold $T_2$, the power converter is tripped and the circuit breakers are opened in step S8. This may involve opening the AC circuit breakers 115 and optionally the DC circuit breakers or DC contactors 110. It may further involve stopping the operation of the semiconductor switches of the power converter, as illustrated for example in Figs. 5 and 6.

For the purpose of clarity of presentation, Fig. 4 does not show the steps of returning to normal operation upon dropping of the voltage on the power grid, e.g. upon clearance of the overvoltage condition.

Besides employing modulation index thresholds in steps S3, S5 and S7, different thresholds, such as thresholds for the grid voltage, may be employed.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

**Claims**

1.  A method of controlling a power converter during an overvoltage event, wherein the power converter (100) is arranged to convert electrical power received from a power source (150) into AC electrical power that is fed into a power grid (200), wherein the power converter (100) comprises plural semiconductor switches that are operated using a pulse width modulation, PWM, technique, wherein the method comprises:

    - monitoring a parameter (M, $v_a$, $v_g$) indicative of a voltage on a grid side of the power converter (100);
    - operating the power converter (100) in a first operating mode (31) in which the power converter feeds electrical power into the power grid (200); and
    - upon detecting an overvoltage condition based on the monitored parameter, operating the power converter (100) in a second operating mode (32) different from the first operating mode (31), wherein the second operating mode (32) is a ride through mode in which the power converter (100) remains connected to the power grid (200),

wherein operating in the second operating mode (32) comprises operating the power converter (100) in an overmodulation mode of the PWM technique and increasing the reactive power consumption of the power converter (100).

2. The method according to claim 1, wherein changing the operation to the second operating mode (32) comprises simultaneously operating the power converter (100) in the overmodulation mode and increasing the reactive power consumption during at least some period of time of operation in the second operating mode (32).

3. The method according to claim 1 or 2, wherein operating in the second operating mode comprises first operating the power converter (100) in the overmodulation mode and later increasing the reactive power consumption; or first increasing the reactive power consumption and later operating the power converter (100) in the overmodulation mode.

4. The method according to any of the preceding claims, wherein operating the power converter (100) in the overmodulation mode comprises operating the power converter (100) with a modulation index (M) larger than 1.154.

5. The method according to any of the preceding claims, wherein operating the power converter (100) in the overmodulation mode comprises controlling the power converter (100) with a reference waveform of the PWM technique that has a larger amplitude than an amplitude of a carrier waveform of the PWM technique.

6. The method according to any of the preceding claims, wherein increasing the reactive power consumption of the power converter (100) comprises lowering an AC voltage or reducing an AC voltage increase on a grid side of the power converter (100).

7. The method according to any of the preceding claims, wherein increasing the reactive power consumption of the power converter (100) comprise changing a setpoint of a control of the power converter (100) that controls the reactive power output of the power converter (100) to cause the power converter to generate AC electrical power with a lagging power factor at its AC power output.

8. The method according to any of the preceding claims, wherein increasing the reactive power consumption of the power converter comprises controlling the power converter (100) to consume the maximum amount of reactive power possible under current operating conditions of the power converter (100).

9. The method according to any of the preceding claims, wherein operating in the second operating mode comprises, upon the monitored parameter (M, $v_a$, $v_g$) reaching or exceeding a respective curtailing threshold ($T_1$), reducing and/or stopping an active power output of the power converter (100) to increase a reactive power consumption capability of the power converter (100).

10. The method according to any of the preceding claims, wherein the monitored parameter (M, $v_a$, $v_g$) is at least one of a voltage ($v_a$, $v_g$) on a grid side of the power converter, a voltage on a power source side of the power converter ($v_{bat}$), or a modulation index (M), wherein the overvoltage condition for entering the second operating mode (32) is detected by detecting that the monitored grid side voltage ($v_a$, $v_g$) reaches or exceeds a voltage threshold, by detecting that the monitored power source side voltage ($v_{bat}$) reaches or exceeds a voltage threshold, by detecting that the monitored power source side voltage ($v_{bat}$) and the monitored grid side voltage ($v_a$, $v_g$) fulfill a predefined relationship and/or by detecting that the modulation index (M) reaches or exceeds a modulation index threshold ($T_0$).

11. The method according to any of the preceding claims, wherein the monitored parameter (M, $v_a$, $v_g$) is at least one of a voltage ($v_a$, $v_g$) on a grid side of the power converter, a voltage on a power source side of the power converter ($v_{bat}$), or a modulation index (M), wherein the method further comprises opening a circuit breaker (115) and/or contactor to decouple the power converter (100) from the power grid (200) and/or the power source upon the monitored grid side voltage ($v_a$, $v_g$) reaching or exceeding a second voltage threshold, upon the monitored power source side voltage ($v_{bat}$) reaching or exceeding a second voltage threshold, upon the monitored power source side voltage ($v_{bat}$) and the monitored grid side voltage ($v_a$, $v_g$) fulfilling a predefined relationship, and/or upon a modulation index (M) reaching or exceeding a second modulation index threshold ($T_2$).

12. The method according to any of the preceding claims, wherein an inductance (160) is coupled between the power converter (100) and the power grid (200), in particular between the power converter (100) and a transformer (170) that transforms the electrical power to be fed into the power grid (200).

13. The method according to any of the preceding claims, wherein the power source (150) is a DC power source and/or wherein the power source (150) is an energy storage device, in particular a battery.

14. A control system configured to control a power converter (100) during an overvoltage event, wherein the power converter (100) is arranged to convert electrical power received from a power source (150) into AC electrical power that is fed into a power grid (200), wherein the power converter (100) comprises plural semiconductor switches and is configured to operate the semiconductor switches using a pulse width modulation, PWM, technique, wherein the control system (10) is configured to perform the method according to any of the preceding claims.

15. A computer program for controlling a power converter (100) during an overvoltage event, wherein the power converter (100) is arranged to convert electrical power received from a power source (150) into AC electrical power that is fed into a power grid (200), wherein the power converter (100) comprises plural semiconductor switches and is configured to operate the semiconductor switches using a pulse width modulation, PWM, technique, wherein the computer program comprises control instructions which, when executed by a processing unit (11) of a control system (10) that controls the operation of the power converter, cause the processing unit (11) to perform the method of any of claims 1-13.

FIG 1

EP 4 637 010 A1

FIG 2

FIG 3

## FIG 4

Operating the power converter in first operating mode using PWM — S1

Monitoring voltage on grid side of power converter — S2

S3
Overvoltage event detected?
no / yes

Operate power converter in second operating mode (ride through) by operating power converter in overmodulation mode and increasing reactive power consumption of power converter (until clearance of overvoltage event) — S4

S5
M > first threshold?
no / yes

Increase reactive power consumption at expense of active power output (until clearance of overvoltage event or dropping of modulation index below first threshold) — S6

S7
M > second threshold?
no / yes

Open circuit breaker(s) — S8

## FIG 5

FIG 6

## FIG 7

Europäisches
Patentamt
European
Patent Office
Office européen
des brevets

# EUROPEAN SEARCH REPORT

**Application Number**

EP 24 38 2417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/008912 A1 (GUPTA AMIT KUMAR [SG] ET AL) 9 January 2014 (2014-01-09) <br> * paragraphs [0004] - [0009], [0042] - [0049], [0053], [0060], [0061] * <br> * paragraphs [0050] - [0052]; figure 7 * <br> * figure 6 * | 1-15 | INV. <br> H02M1/32 <br> H02M7/5395 |
| X | KANGLE REN ET AL: "Grid fault ride through of a medium-voltage three-level full power wind power converter", 2016 IEEE 8TH INTERNATIONAL POWER ELECTRONICS AND MOTION CONTROL CONFERENCE (IPEMC-ECCE ASIA), IEEE, 22 May 2016 (2016-05-22), pages 1509-1514, XP032924502, DOI: 10.1109/IPEMC.2016.7512515 [retrieved on 2016-07-13] <br> * abstract + "Introduction"; figure 2 * | 1-15 | |
| A | CHINCHILLA M ET AL: "Power limits of grid-connected modern wind energy systems", RENEWABLE ENERGY, PERGAMON PRESS, OXFORD, GB, vol. 31, no. 9, 1 July 2006 (2006-07-01), pages 1455-1470, XP027964969, ISSN: 0960-1481 [retrieved on 2006-07-01] <br> * Section 5 * <br> * page 1468, last paragraph; figure 12 * | 1-15 | TECHNICAL FIELDS SEARCHED (IPC) <br><br> H02M <br> F03G <br> F03D |

The present search report has been drawn up for all claims

| Place of search | Date of completion of the search | Examiner |
|---|---|---|
| The Hague | 2 October 2024 | Standaert, Frans |

EPO FORM 1503 03.82 (P04C01)

## ANNEX TO THE EUROPEAN SEARCH REPORT
## ON EUROPEAN PATENT APPLICATION NO.

EP 24 38 2417

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2024

| Patent document cited in search report | Publication date | Patent family member(s) | | Publication date |
|---|---|---|---|---|
| US 2014008912 A1 | 09-01-2014 | CN | 103328816 A | 25-09-2013 |
| | | EP | 2655871 A1 | 30-10-2013 |
| | | ES | 2566668 T3 | 14-04-2016 |
| | | US | 2014008912 A1 | 09-01-2014 |
| | | WO | 2012083963 A1 | 28-06-2012 |

EPO FORM P0459

For more details about this annex : see Official Journal of the European Patent Office, No. 12/82